# EUROPEAN PATENT SPECIFICATION

(11) **EP 3 636 510 B1**
(45) Date of publication and mention of the grant of the patent: **02.04.2025**
(21) Application number: 19200485.1
(22) Date of filing: 30.09.2019
(51) Int. Cl.: B61F 3/16, F16F 1/38, F16F 1/387

(54) **DEVICE FOR IMPROVING COMPREHENSIVE PERFORMANCE OF ELASTIC COMPONENT OF AXLELESS BOGIE SYSTEM**
VORRICHTUNG ZUR VERBESSERUNG DER UMFASSENDEN LEISTUNG EINER ELASTISCHEN KOMPONENTE EINES ACHSLOSEN DREHGESTELLSYSTEMS
DISPOSITIF POUR AMÉLIORER LA PERFORMANCE GLOBALE D'UN COMPOSANT ÉLASTIQUE D'UN SYSTÈME DE BOGIE SANS ESSIEUX

(30) Priority: 08.10.2018 CN 201811168266
(43) Date of publication of application: 15.04.2020
(73) Proprietor: Zhuzhou Times New Material Technology Co., Ltd., Zhuzhou, Hunan 412007 (CN)
(72) Inventor: LUO, Jun, Zhuzhou, Hunan, 412007 (CN); CHENG, Haitao, Zhuzhou, Hunan, 412007 (CN); LIN, Sheng, Zhuzhou, Hunan, 412007 (CN); HUANG, Youjian, Zhuzhou, Hunan, 412007 (CN); JIANG, Zhongsan, Zhuzhou, Hunan, 412007 (CN); FENG, Wansheng, Zhuzhou, Hunan, 412007 (CN); ZHANG, Yuxiang, Zhuzhou, Hunan, 412007 (CN); HUANG, Jiangbiao, Zhuzhou, Hunan, 412007 (CN); CHEN, Junhui, Zhuzhou, Hunan, 412007 (CN)
(74) Representative: Zhu, Junyi

(56) References cited:
- EP-A2- 0 332 903
- CH-A- 331 740
- CN-A- 108 438 010
- CN-B- 103 112 466
- CN-B- 103 129 400
- US-A- 4 832 319

## Description

### Technical Field:

The present invention relates to a vibration isolation and reduction method and device for a G-series high-speed train, and particularly to a method and device for improving comprehensive performance of an elastic suspension component of an axleless bogie (also called independent wheel) system. The method and device for improving comprehensive performance of an elastic suspension component can effectively improve the comprehensive performance of the elastic suspension component in all directions, thereby meeting the requirement of vibration reduction and isolation of a high-speed bogie system with independent wheels. The present invention belongs to the technical field of rail transit manufacturing.

### Background:

G-series high-speed trains refer to G-series trains with a construction speed of more than 250km/h. G-series high-speed trains can meet transportation requirements of long distance, high carrying capacity, high density and short duration of trip. With the continuous improvement of modern G-series high-speed train technology, the application of G-series high-speed trains in the market have become more and more popular, and have been widely recognized in many countries. Due to the good economic promotion of high-speed railways, Japan, Germany, Spain, Italy, Sweden, South Korea, Belgium, the Netherlands, the United Kingdom and the United States have all studied high-speed railway technology and developed a series of G-series high-speed trains.

Among them, a G-series high-speed train using independent wheel sets is a novel high-speed pendulum G-series high-speed train cooperatively developed by Spanish Talgo and Bombardier. For such researched and developed Talgo350 pendulum train, the sample train was developed at the end of 2000 and reached the highest test speed of 359km/h on February 24, 2001. This Talgo350 pendulum train uses a unique axleless bogie (or independent wheel) technology. The so-called axleless bogie (or independent wheel) technology means that the wheel sets are not connected to each other, and each wheel can rotate freely without being affected by the rotation of the other wheel. This axleless bogie has the most important characteristic that: two wheels of the same bogie can pass the rail curve at different speed; this characteristic is very important because it can prevent the wheel sets on the same axis from being affected by the snaking motion which is a very dangerous and destructive motion that is common to traditional wheel sets and may cause numerous failures. Since this axleless bogie has no snaking motion, the train is steady when passing through the curve, thus reducing the attrition of rails. In addition, such design has a higher economic advantage, because the two wheels on the same axis do not have to meet the requirements that the traditional wheel sets must meet, namely the same diameter and tread shape. The physical separation of wheel sets makes the passengers feel no altitude difference when they move back and forth between railroad cars.

However, for this technology, only the Spanish Talgo 350 train is currently recognized as a successful example of the use of independent wheels in the world. Although the G-series high-speed train using independent wheels has many advantages, it also brings many unfavorable factors due to the increased freedom of the wheels. One of them is that it makes various working conditions of the elastic suspension component applied to this kind of bogie are much more severe. And some of existing elastic and traditional suspension components cannot meet the needs of this bogie system with independent wheels. For most existing elastic suspension components, only the change in radial stiffness is considered, and change in axial stiffness at most. The change in stiffness caused by this independent wheel is not only in two directions (radial direction and axial direction), but in three or even four directions. Thus, obviously, the existing elastic suspension components cannot meet this requirement. Therefore, there is a need to develop a new elastic suspension component to meet the requirement of vibration reduction and isolation of the bogie system with independent wheels.

There is no report about patent literature with the same technology as the present invention through patent retrieval. There are several patents related to the present invention:
1. Invention patent of which the patent application No. is EP: 15382471, the title is "WHEELSET FOR RAILWAY VEHICLES", and the applicant is TALGO PATENTES: the patent discloses a bogie with dispersed axle, comprising two axle sets, each set of axle including two wheels, each wheel being located at one side of a wheel set according to the longitudinal axis of the vehicle, wherein the two wheels of each set of axle have independent axis; and are connected together by a frame. In this way, two frames of the axle sets are connected to each other by correspondingly hinging with the longitudinal axis of the vehicle, and tensile stress and compressive stress are allowed to be transmitted between the frames of the wheel sets. The distance between the wheel sets is modified in each axle set.
2. Invention patent of which the patent No. is CN201711394266.9, the title is "wheel hub-type bogie with independent wheels", and the applicant is Dalian Jiaotong University: the patent discloses a bogie for a high-speed train or an urban rail transit vehicle. The framework of the hub-type bogie with independent wheels includes: two symmetrically arranged side frames, a central crossbeam and two side crossbeams, wherein each side frame is in an H-shaped welded structure, the upper part thereof is provided with a mounting seat for an air spring, and the end part is provided with a mounting seat for a brake caliper, and a mounting seat for a horizontal hydraulic shock absorber; both the central crossbeam and the two side crossbeams are in a seamless steel pipe structure; two ends of the side crossbeam extend out of the side frame for mounting an axle box body; independent wheel sets are mounted on the side frames of the framework by the axle box body and a series of suspensions; the brake caliper is mounted on the mounting seat for a brake caliper at the end of the side frame of the framework; a sensor is mounted on the lower part of the vehicle body and is located above the independent wheel set; the air spring is mounted on the mounting seat for an air spring on the upper part of the side frame of the framework; and the horizontal hydraulic shock absorber is mounted on the mounting seat for a horizontal hydraulic shock absorber at the end of the side frame of the framework.
3. Invention patent of which the patent No. is CN201621058644.7, the title is "bogie structure with independent rotating wheel sets for rail vehicle", and the applicant is Southwest Jiaotong University: the patent discloses a bogie structure with independent rotating wheel sets for a rail vehicle, belonging to the technical field of bogie structures. The patent can effectively solve the problem existing in the horizontal coupling bogie with independent wheels. The axle diameter of both ends of the axle is in interference with the inner ring of a rolling bearing, the outer ring is fixed to a wheel hub, the outer side of the wheel hub is axially provided with a secondary tread, and the axle head at both ends of the axle is provided with an axle head cover; the two side longitudinal beams of the framework are in a bow-shaped structure, a horizontal elastic restraint front member is arranged at the front end of the downward-facing notch in the front part of the longitudinal beam, a vertical elastic restraint front member is arranged at the top of the downward-facing notch of the longitudinal beam, and a friction-pair front supporting seat is arranged at the rear end of the downward-facing notch of the longitudinal beam; the free end of the horizontal elastic restraint front member and the free end of the vertical elastic restraint front member are respectively fixed to the axle head cover in the horizontal direction and vertical direction; a bearing pedestal is arranged at both ends of the secondary axis, a pressure wheel is arranged inside the bearing pedestal, and the pressure wheel is tangent to the outer diameter of the secondary tread; and the end of the horizontal elastic member is fixed to the bearing pedestal arranged at the end of the secondary axis.

US 4 832 319 A discloses a vibration absorbing apparatus disposed between a vibration source and a vibration receiving portion and having a tubular member which is formed such as to pass through an expandable liquid chamber and which is attached to one of the vibration source and the vibration receiving portion. A partitioning plate is secured to the outer periphery of the tubular member such as to divide the liquid chamber into a plurality of liquid sub-chambers. The liquid sub-chambers communicate with each other via an orifice. Accordingly, even if the direction in which vibration acts upon the apparatus is shifted, it is possible to prevent the occurrence of "pinch" between the partitioning plate and the tubular member.

CN 108 438 010 A provides a method for preventing rotary arm joint of a high-speed train against axial endplay. According to the position where the rotary arm joint is located, the rotary arm joint is divided into two press-fitting combined structures for vulcanization bodies and a mandrel. The two vulcanization bodies are installed oppositely on the mandrel. Vulcanization body rubber parts for the rotary arm joint are pre-compressed through relative positions between outer sleeves and inner sleeves. Axial limiting devices are arranged in the rotary arm joint and help prevent the rotary arm joint against axial endplay during operation. The axial limiting comprises combined limiting in four aspects including limiting of the outer sleeves of the rotary arm joint, limiting of the vulcanization body rubber parts, limiting of inner sleeves and/or limiting of the mandrel. Due to the combined limiting in four aspects including limiting of the outer sleeves of the rotary arm joint, limiting of the vulcanization body rubber parts, limiting of inner sleeves and/or limiting of the mandrel, the rotary arm joint is prevented against axial endplay during operation.

CN 103 112 466 B discloses a railway vehicle bogie which comprises a first wheel pair, a second wheel pair, a first side frame, a second side frame, a swing bolster, a damping device, a carrying saddle, a secondary spring suspension and a constant-contact side bearing. The first side frame and the second side frame are mounted on outer sides of two ends of the first wheel pair and the second wheel pair. A two-stage-stiffness primary suspension system is mounted between a small guide frame on an end portion of each side frame and the carrying saddle, and a first pull rod and a second pull rod are connected between triangle holes of the first side frame and the second side frame and intercrossed. The railway vehicle bogie has the advantages that the railway vehicle bogie is simple in structure, convenient to maintain and high in adaptability to twisted lines, shear deformation of the two side frames of the bogie is restrained by elasticity, and diamonding is inhibited, so that the bogie has a certain capacity to restore a correct position, dynamic acting force of wheel/rail parts is relieved, radial capacity between wheels and rails of the bogie, vehicle running speed and curve passage capacity are improved, and vehicle running quality is improved.

EP 0 332 903 discloses a hydraulically damped dual-chamber engine mount having an integral tension and compression stop. In order to achieve a soft stop and an additional reduction in dynamic stiffness of the mount, it is proposed according to the invention that the annular stop plate of the tension and compression stop be suspended with its inner edge in a clearance on the end of a cylindrical projection of the mounting plate projecting into the operating chamber, thus damping its axial and radial mobility.

Through analysis on these patents, although these patents relate to the bogie system with independent wheels, and propose some improved technical solutions, through careful analysis, all these patents do not consider that how to improve the comprehensive performance of an elastic components applied in suspension system to adapt to the vibration reduction and isolation requirements of the bogie system with independent wheels, so how to improve the comprehensive performance of an elastic suspension component of the bogie system with independent wheels remains to be further studied.

### Summary of the Invention

The object of the present invention is to propose a novel method and device for improving the comprehensive performance of an elastic component of an axleless bogie system aiming at the problems that various working conditions of suspension components of the existing bogie system with independent wheels are much more severe, and the existing elastic suspension components cannot meet the requirements. The method and device for improving the comprehensive performance of an elastic component of an axleless bogie system can effectively meet the requirement of vibration reduction and isolation of the bogie system with independent wheels.

To achieve the object, the present invention provides a method for improving the comprehensive performance of an elastic component of an axleless bogie system. According to the structural feature of an axleless bogie, at least one elastic material component is arranged in suspension system of the axleless bogie system; the elastic material component is combined with a metallic component to form an elastic-metallic combination component; multiple free surfaces are provided for the elastic material component in the elastic-metallic combination component, stress release is realized by the multiple free surfaces of the elastic material component, therefore, the stress of the elastic material component of the axleless bogie in all directions is reduced..

Further, Providing multiple free surfaces of the elastic material component refers to designing free surfaces for the elastic material component at different angles and positions in the combination of elastic material component and the metallic component respectively according to the stress conditions of each component, so that stress can be released by the free surfaces when the elastic material component is stressed in all directions, and the stress of the elastic material component is reduced..

Further, to release stress by free surfaces when the elastic material component is stressed in all directions, free surfaces are provided in three directions, wherein all the free surfaces are at different angles and positions, to guarantee that stress is released by the free surfaces provided in three or more directions when the elastic material component is stressed in multiple directions.

Further, to release stress by free surfaces when the elastic material component is stressed in all directions, free surfaces are provided in three directions respectively, wherein the first free surface to be designed in the outer side of diameter direction in which the elastic material is combined to the metal material is called a outer free surface; the second free surface to be designed in the inner side of diameter direction in which the elastic material is combined to the metal material is called inner free surface; and the third free surface to be designed in the inclined direction in which the elastic material is combined to the metal material is called inclined side free surface; by the three free surfaces, it is guaranteed that stress is released when the elastic material component is stressed in multiple directions.

Further, to guarantee that stress is released by three free surfaces when the elastic material is stressed in multiple directions, the inclined side free surface is connected to the inner free surface to form a spherical elastic material component structure, furthermore; by combining the structure to the outer free surface, the entire elastic material forms a Y-shaped elastic material component, to meet the requirements of a very high axial stiffness and low radial stiffness of the elastic component of the suspension system with independent wheels at the same time.

An elastic suspension device of an axleless bogie system for realizing the method for improving the comprehensive performance of an elastic component of the axleless bogie system in claim 1, comprising at least one elastic material component combined with a metallic component to form an elastic-metallic combination component, characterized in that multiple free surfaces of the elastic material component are provided in the combination of the elastic material component and the metallic component, stress is released by the multiple free surfaces of the elastic material component, and the stress of the elastic material component of the axleless bogie in all directions is reduced.

Further, the number of free surfaces of the elastic material component is three, and all the free surfaces are at different angles and positions, to guarantee that stress is released when the elastic material component is stressed in multiple directions.

Further, the number of free surfaces of the elastic material component is three, wherein one free surface is in the outer side diameter direction in which the elastic material is combined to the metallic material, the other free surface is in the inner side diameter direction in which the elastic material is combined to the metallic material, and another free surface is in the inclined side direction in which the elastic material is combined to the metal material.

Further, the free surface in the inclined direction is connected to the free surface in the inner diameter direction to form a spherical elastic material structure, by combining with the free surface in the outer side diameter direction, the entire elastic material component forms a Y-shaped elastic material component, to meet the requirements of very high axial stiffness and low radial stiffness of the elastic component of the system with independent wheels at the same time.

Further, the elastic material component is made of rubber material, and the rubber material is compounded with the metal component together by integral vulcanization, forming a rubber-metal elastic compounded component. The rubber material and metal structural component is encapsulated.

The present invention has the advantages that:
The present invention adopts the concept of multiple free surfaces to design the elastic component into an elastic suspension component with multiple free surfaces, which can substantially reduce the rubber stress and prolong the fatigue life of the elastic suspension component, and has the following advantages:
1. The present invention can effectively realize stress release in all directions and reduce rubber stress by the design of multiple free surfaces;
2. The present invention can realize a wide match range of four stiffness of radial-axial-deflection-torsional by adjusting the structure of each free surface, easily achieve unique stiffness match ratios of four directions such as 7:100:300:100, and meet the requirements of various load conditions of a train;
3. The elastic component of the present invention adopts a Y-shaped elastic material structural, which is very close to the spherical structure design, and substantially reduces deflection stiffness;
4. The elastic component of the present invention internally adopts an encapsulation design to realize self-anti-corrosion and anti-shock in radial direction;
5. Applying the principle of the present invention to the motor suspension system can fully meet the requirements of Spanish Talgo 350 trains; and
6. In the present invention, rubber is filled and vulcanized integrally by means of the rubber filling holes of the metal side ring when manufacturing the rubber component, thereby effectively realizing rubber filling and positioning of the product in a mould.

### Description of Drawings

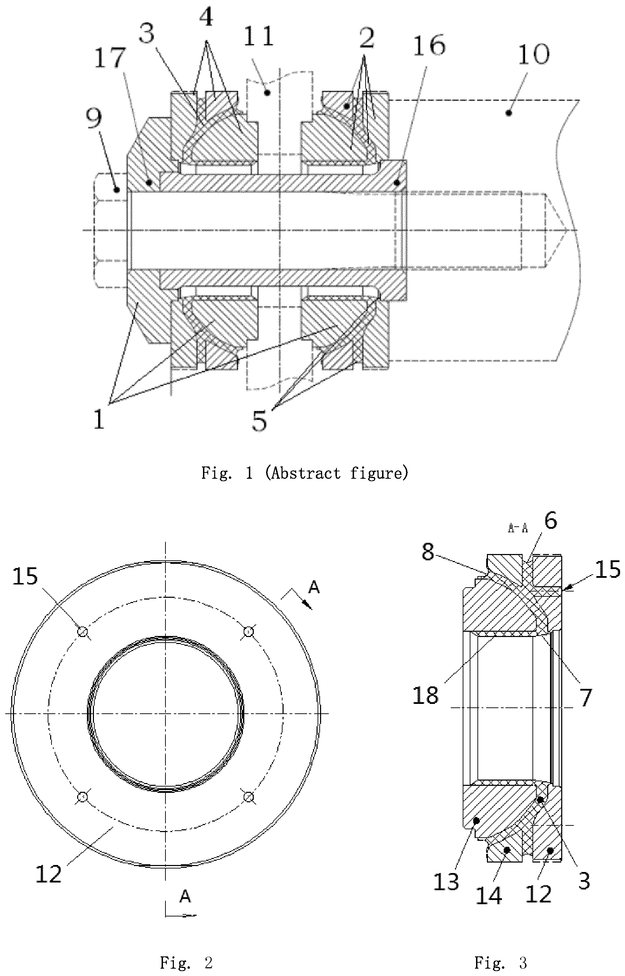

Fig. 1 is an overall structural schematic diagram of an embodiment of the present invention;
Fig. 2 is a structural schematic diagram of one side of a spherical hinge of an embodiment of the present invention;
Fig. 3 is a side cross-sectional view;
Fig. 4 is a curve chart of radial stiffness of an embodiment of the present invention; and
Fig. 5 is a curve chart of axial stiffness of an embodiment of the present invention.

### Detailed Description

The present invention is further described below in combination with the drawings and the specific embodiments.

### Embodiment 1

As shown in the figure, the present invention relates to a specific use of a method and device for improving the comprehensive performance of an elastic component of an axleless bogie system, mainly applied to a motor hanger 1 of the Spanish Talgo 350 train. The present invention has the strategies that: according to the structure characteristics of the axleless bogie system of the Spanish Talgo 350 train, multiple free surfaces 5 of a rubber component are provided in the combination of the rubber component 3 and the metallic component 4 of the rubber-metallic elastic compounded component 2 of the motor hanger 1, stress is released by the multiple free surfaces 5 of the rubber component 3, the stress of the elastic material component is reduced, and thus multidirectional stiffness performance adjustment is performed.

Providing multiple free surfaces 5 of the rubber component 3 in the combination of the rubber component 3 and the metal component 4 of the rubber-metal elastic compounded component 2 refers to adopting three rubber free surfaces 5 in the rubber-metal elastic compounded component 2 of the combination of the rubber component 3 and the metal component 4 of the motor hanger 1 in the bogie, wherein one free surface is a free surface 6 in the outer diameter direction of the rubber component, the other free surface is a free surface 7 in the inner diameter direction of the rubber component 3, and another free surface is a free surface 8 provided in the inclined direction, forming a rubber component 3 having free surfaces in three directions.

Rubber-metal elastic compounded components 2 of the motor hanger 1 are assembled in pairs, and a symmetrical axial pre-pressing combination structure is adopted; the motor hanger 1 is fixed to a motor 10 by a central bolt 9, two rubber-metal elastic compounded components 2 are adopted by the motor hanger 1, and the two rubber-metal elastic compounded components 2 are mounted on a bogie crossbeam mounting seat 11 in a symmetrical axial pre-pressing combination mode by an inner sleeve 16 and a pressing sleeve 17, forming a motor hanger; axial symmetrical pre-pressing is realized when the central bolt 9 passes through the pressing sleeve 17 and then is connected and fixed to the motor 10.

Wherein, the rubber component 3 adopts a suspension segmented Y-shaped rubber structure; one side surface of a metal side ring 12 of the motor hanger 1 is fixed to the bogie crossbeam mounting seat 11, and the other side surface of the metal side ring 12 is vulcanized together with the rubber component 3 through a first surface of the rubber component (3); a second surface of the other surface of the rubber component 3 connected to the metal side ring 12 is vulcanized together with the metal inner ring 13, the metal inner ring 13 and the rubber component 3 are in an encapsulation structure, and the rubber component 3 is always wrapped around the inner metal ring 13 to extend to the inner-diameter inner surface of the inner metal ring 13, forming an encapsulation layer 18; a metal outer ring 14 is arranged in the outer diameter direction in which the metal inner ring 13 is combined with the rubber component 3, and the metal outer ring 14 is vulcanized together and comes into contact with further two surfaces of the rubber component 3, so that the rubber component 3 is formed into a rubber component 3 having free surfaces in three directions.

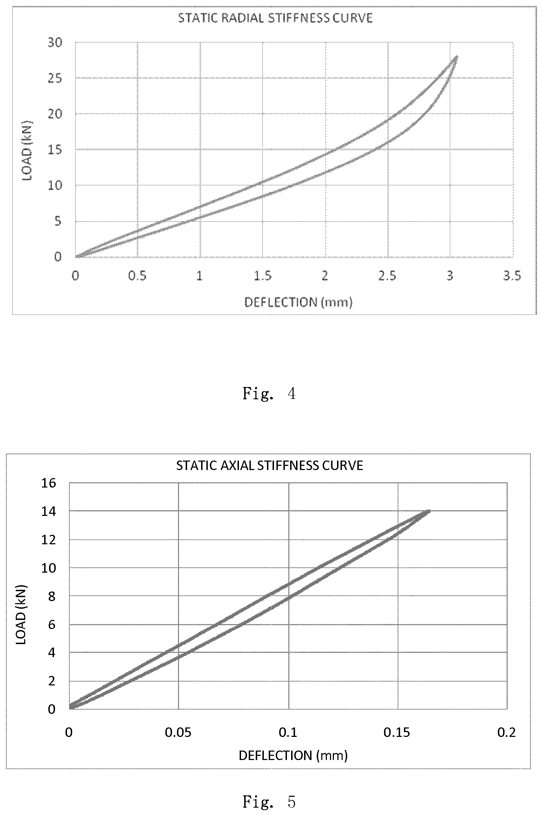

When the motor hanger 1 is radially loaded, the metal side ring 12 is fixed to the bogie crossbeam mounting seat 11, the load is acted on the metal inner ring 13 connected with a screw rod (integratedly connected by a metal component), the metal outer ring 14 does not bear, forming a suspended state; meanwhile, rubber between the metal outer ring 14 and the metal side ring 12 is completely in a shearing state (does not provide radial stiffness basically), the radial stiffness is reduced by superposing the three free surfaces of the rubber component 3, and during axial loading, because of the effect of compression, the rubber between the metal outer ring 14 and the metal side ring 12 is in a compression state, so that the axial stiffness is substantially increased, the loading performance of the whole motor hanger in all directions is improved, the rubber stress is substantially reduced, and the fatigue life of the motor hanger is prolonged; the radial stiffness curve of the loading and unloading of the motor hanger is shown in Fig. 4; and the axial stiffness curve of the loading and unloading of the motor hanger is shown in Fig. 5. As shown in the figure, the radial stiffness curve of the loading and unloading of the motor hanger of the present invention is substantially reduced, while the axial stiffness curve of the loading and unloading of the motor hanger is substantially increased.

The metal side ring 12 of the motor hanger 1 is provided with rubber filling holes 15, and rubber is filled through the rubber filling holes 15 of the metal side ring when manufacturing the rubber component, thereby realizing rubber filling and positioning of the rubber component in a mould during integral vulcanization. The rubber filling holes 15 are four in number, and are uniformly distributed, guaranteeing rubber filling uniformity.

The above described embodiments only clearly and completely describe the technical solution of the present invention in combination with drawings. Apparently, the described embodiments are merely part of the embodiments of the present invention, not all of the embodiments.

Through the description of the above embodiments, it can be known that the present invention relates to a method for improving the comprehensive performance of an elastic component of an axleless bogie system. According to the structure characteristics of the axleless bogie, multiple free surfaces of the elastic material component are provided in the combination of the elastic component and the elastic material component, stress is released by the multiple free surfaces of the elastic material component, and the stress of the elastic material component of the axleless bogie in all directions is reduced.

Further, providing multiple free surfaces of the elastic material component refers to respectively providing free surfaces of the elastic material component at different angles and positions in the combination of elastic material component and the metal component according to the stress situation of each component, so that stress can be released by the free surfaces when the elastic material is stressed in all directions, and the stress of the elastic material is reduced.

Further, the number of the multiple free surfaces of the elastic material component is three or more, and all the free surfaces are at different angles and positions, to guarantee that stress is released when the elastic material component is stressed in multiple directions.

Further, the number of the multiple free surfaces of the elastic material component is three, wherein one free surface is in the outer diameter direction in which the elastic material is combined with the metal material, the other free surface is in the inner diameter direction in which the elastic material is combined with the metal material, and another free surface is in the inclined direction in which the elastic material is combined with the metal material.

Further, the free surface in the inclined direction is connected with the free surface in the inner diameter direction to form a spherical elastic material component structure, by combining with the free surface in the outer diameter direction, the entire elastic material component forms a Y-shaped elastic material component, to meet the requirements of high axial stiffness and low radial stiffness of the elastic component of the system with independent wheels.

Further, the elastic material component is made of rubber material, and the rubber material is compounded with the metal component together by integral vulcanization, forming a rubber-metal elastic compounded component. The rubber material and metal structural component is encapsulated.

The present invention has the advantages that:
The present invention adopts the concept of multiple free surfaces to design the elastic component into an elastic suspension component with multiple free surfaces, which can substantially reduce the rubber stress and prolong the fatigue life of the elastic suspension component, and has the following advantages:
1. The present invention can effectively realize stress release in all directions and reduce rubber stress by the design of multiple free surfaces;
2. The present invention can realize different stiffness match in four directions by adjusting the structure of each free surface, easily achieve a unique ratio of stiffness match in four directions of radial: axial: deflection: torsional to be 7:100:300:100, and meet the requirements of various loading conditions;
3. The elastic component of the present invention adopts a Y-shaped elastic material structural, which is very close to a spherical structure design, and substantially reduces deflection stiffness;
4. The elastic component of the present invention internally adopts an encapsulation design to realize self-anti-corrosion and anti-shock in radial direction;
5. Applying the principle of the present invention to the motor hanger can fully meet the requirements of Spanish Talgo 350 trains; and
6. In the present invention, rubber is filled and vulcanized integrally by means of the rubber filling holes of the metal side ring when manufacturing the rubber component, thereby effectively realizing rubber filling and positioning of the product in a mould.

## Claims

1. An elastic suspension device for a motor-hanger of an axleless bogie system,
- wherein at least one elastic material component (3) is configured to be arranged in the suspension system of the axleless bogie system;
- wherein the elastic material component (3) is combined with a metallic component (4) to form an elastic-metallic combination component (2);
- exactly three free surfaces (5) are provided for the elastic material component (3) in the elastic-metallic combination component (2), whereby stress release is realized by the multiple free surfaces (5) of the elastic material component (3), therefore, the stress of the elastic material component (3) of the axleless bogie in all directions is reduced, wherein providing multiple free surfaces (5) of the elastic material component (3) refers;
- wherein the free surfaces (5) for the elastic material component (3) are designed at different angles and positions in the combination of elastic material component (3) and the metallic component (4) respectively according to the stress conditions of each component, so that stress can be released by the free surfaces (5) when the elastic material component (3) is stressed in all directions, and the stress of the elastic material component (3) is reduced,
- wherein the free surfaces (5) are provided in three directions respectively, the first free surface, called the outer free surface (6), being designed in the outer side of diameter direction in which the elastic material is combined to the metal material; the second free surface, called the inner free surface (7), being designed in the inner side of diameter direction in which the elastic material is combined to the metal material; and the third free surface, called the inclined side free surface (8), being designed in the inclined direction in which the elastic material is combined to the metal material; these three free surfaces guaranteeing that stress is released when the elastic material component is stressed in multiple directions;
- **characterized in that** the inclined side free surface (8) is connected to the inner free surface (7) to form a spherical elastic material component structure, this structure being combined to the outer free surface (6), such that the entire elastic material forms a Y-shaped elastic material component, in order to meet the requirements of a very high axial stiffness and low radial stiffness of the elastic component of the system with independent wheels at the same time.

2. The elastic suspension device for a motor-hanger of an axleless bogie system according to claim 1, **characterized in that** the elastic material component (3) is made of rubber material, and the rubber material is compounded with the metallic component (4) together by integral vulcanization, forming a rubber-metal elastic compounded component (2), wherein the rubber material and metallic component (4) is encapsulated.

3. The elastic suspension device for a motor-hanger of an axleless bogie system according to claim 1, **characterized in that** the metallic component (4) includes a metal side ring (12), a metal inner ring (13) and a metal outer ring (14), wherein one side surface of the metal side ring (12) of the elastic suspension device for the motor hanger (1) is configured to be fixed to the bogie crossbeam mounting seat (11), and the other side surface of the metal side ring (12) is vulcanized together with the rubber component (3) through a first surface of the rubber component (3); a second surface of the rubber component (3) connected to the metal side ring (12) is vulcanized together with the metal inner ring (13), the metal inner ring (13) and the rubber component (3) are in an encapsulation structure, and the rubber component (3) is always wrapped around the inner metal ring (13) to extend to the inner-diameter inner surface of the inner metal ring (13), forming an encapsulation layer (18); the metal outer ring (14) is arranged in the outer diameter direction in which the metal inner ring (13) is combined with the rubber component (3), and the metal outer ring (14) is vulcanized together and comes into contact with further two surfaces of the rubber component (3), so that the rubber component (3) is formed into a rubber component (3) having free surfaces in three directions..

4. The elastic suspension device for a motor-hanger of an axleless bogie system according to claim 3, **characterized in that** the metal side ring (12) is provided with rubber filling holes (15).

5. The elastic suspension device for a motor-hanger of an axleless bogie system according to claim 3, **characterized in that** there are four rubber filling holes (15) are uniformly distributed on the metal side ring (12).

## Patentansprüche

1. Elastische Aufhängungsvorrichtung für eine Motoraufhängung eines achslosen Drehgestellsystems,
- wobei mindestens eine elastische Materialkomponente (3) zur Anordnung im Aufhängungssystem des achslosen Drehgestellsystems ausgebildet ist;
- wobei die elastische Materialkomponente (3) mit einer metallischen Komponente (4) zu einem elastisch-metallischen Kombinationsbauteil (2) kombiniert ist;
- wobei genau drei freie Oberflächen (5) für die elastische Materialkomponente (3) in dem elastisch-metallischen Kombinationsbauteil (2) vorgesehen sind, wodurch ein Spannungsabbau durch die mehreren freien Oberflächen (5) der elastischen Materialkomponente (3) realisiert wird, wodurch die Spannung der elastischen Materialkomponente (3) des achslosen Drehgestells in allen Richtungen reduziert wird, wobei das Vorsehen mehrerer freier Oberflächen (5) der elastischen Materialkomponente (3) sich darauf bezieht;
- wobei die freien Oberflächen (5) für die elastische Materialkomponente (3) in unterschiedlichen Winkeln und Positionen in der Kombination aus der elastischen Materialkomponente (3) und der metallischen Komponente (4) jeweils entsprechend den Spannungszuständen jeder Komponente ausgelegt sind, so dass die Spannung durch die freien Oberflächen (5) abgebaut werden kann, wenn die elastische Materialkomponente (3) in allen Richtungen beansprucht wird, und die Spannung der elastischen Materialkomponente (3) reduziert wird,
- wobei die freien Oberflächen (5) jeweils in drei Richtungen vorgesehen sind, wobei die erste freie Oberfläche, die als äußere freie Oberfläche (6) bezeichnet wird, in der Richtung der äußeren Seite des Durchmessers ausgebildet ist, in der das elastische Material mit dem Metallmaterial verbunden ist; die zweite freie Oberfläche, die als innere freie Oberfläche (7) bezeichnet wird, in der Richtung der inneren Seite des Durchmessers ausgebildet ist, in der das elastische Material mit dem Metallmaterial verbunden ist; und die dritte freie Fläche, die als freie Fläche der geneigten Seite (8) bezeichnet wird, in der geneigten Richtung ausgebildet ist, in der das elastische Material mit dem Metallmaterial verbunden ist; wobei diese drei freien Flächen gewährleisten, dass die Spannung freigesetzt wird, wenn die Komponente aus elastischem Material in mehreren Richtungen belastet wird;
- **dadurch gekennzeichnet, dass** die schräge freie Seitenfläche (8) mit der inneren freien Fläche (7) verbunden ist, um eine kugelförmige Struktur der elastischen Materialkomponente zu bilden, wobei diese Struktur mit der äußeren freien Fläche (6) verbunden ist, so dass das gesamte elastische Material eine Y-förmige elastische Materialkomponente bildet, um die Anforderungen einer sehr hohen axialen Steifigkeit und einer niedrigen radialen Steifigkeit der elastischen Komponente des Systems mit unabhängigen Rädern gleichzeitig zu erfüllen.

2. Elastische Aufhängungsvorrichtung für eine Motoraufhängung eines achslosen Drehgestellsystems nach Anspruch 1, **dadurch gekennzeichnet, dass** die elastische Materialkomponente (3) aus Gummimaterial hergestellt ist und das Gummimaterial mit der metallischen Komponente (4) durch integrale Vulkanisation zusammengemischt ist, wodurch eine elastische Gummi-Metall-Verbundkomponente (2) gebildet wird, wobei das Gummimaterial und die metallische Komponente (4) gekapselt sind.

3. Elastische Aufhängungsvorrichtung für einen Motoraufhänger eines achslosen Drehgestellsystems nach Anspruch 1, **dadurch gekennzeichnet, dass** die metallische Komponente (4) einen Metallseitenring (12), einen Metallinnenring (13) und einen Metallaußenring (14) umfasst, wobei eine Seitenfläche des Metallseitenrings (12) der elastischen Aufhängungsvorrichtung für die Motoraufhängung (1) so konfiguriert ist, dass sie an dem Drehgestellquerträger-Befestigungssitz (11) befestigt wird, und die andere Seitenfläche des Metallseitenrings (12) zusammen mit der Gummikomponente (3) durch eine erste Oberfläche der Gummikomponente (3) vulkanisiert ist; eine zweite Oberfläche der Gummikomponente (3), die mit dem Metallseitenring (12) verbunden ist, wird zusammen mit dem Metallinnenring (13) vulkanisiert, der Metallinnenring (13) und die Gummikomponente (3) befinden sich in einer Verkapselungsstruktur, und die Gummikomponente (3) ist immer um den inneren Metallring (13) gewickelt, um sich bis zur Innenfläche des inneren Durchmessers des inneren Metallrings (13) zu erstrecken, wodurch eine Verkapselungsschicht (18) gebildet wird; ein Metallaußenring (14) in der Außendurchmesserrichtung angeordnet ist, in der der Metallinnenring (13) mit der Gummikomponente (3) kombiniert ist, und der Metallaußenring (14) zusammen vulkanisiert wird und mit zwei weiteren Oberflächen der Gummikomponente (3) in Kontakt kommt, so dass die Gummikomponente (3) zu einer Gummikomponente (3) mit freien Oberflächen in drei Richtungen geformt wird.

4. Elastische Aufhängung für einen Motorhänger eines achslosen Drehgestellsystems nach Anspruch 3, **dadurch gekennzeichnet, dass** der Metallseitenring (12) mit Gummifüllöffnungen (15) versehen ist.

5. Elastische Aufhängung für einen Motorhänger eines achslosen Drehgestellsystems nach Anspruch 3, **dadurch gekennzeichnet, dass** auf dem Metallseitenring (12) vier gleichmäßig verteilte Gummifüllöffnungen (15) vorhanden sind.

## Revendications

1. Un dispositif de suspension élastique pour une suspension de moteur d'un système de bogie sans essieu,
- dans lequel au moins un composant en matériau élastique (3) est configuré pour être disposé dans le système de suspension du système de bogie sans essieu ;
- dans lequel le composant en matériau élastique (3) est combiné avec un composant métallique (4) pour former un composant de combinaison élastique-métallique (2) ;
- dans lequel exactement trois surfaces libres (5) sont prévues pour le composant en matériau élastique (3) dans le composant de combinaison élastique-métallique (2), la libération de la contrainte étant réalisée par les multiples surfaces libres (5) du composant en matériau élastique (3), la contrainte du composant en matériau élastique (3) du bogie sans essieu dans toutes les directions est donc réduite, dans lequel la fourniture de multiples surfaces libres (5) du composant en matériau élastique (3) se réfère ;
- dans lequel les surfaces libres (5) du composant en matériau élastique (3) sont conçues à différents angles et positions dans la combinaison du composant en matériau élastique (3) et du composant métallique (4) respectivement en fonction des conditions de contrainte de chaque composant, de sorte que la contrainte peut être libérée par les surfaces libres (5) lorsque le composant en matériau élastique (3) est sollicité dans toutes les directions, et que la contrainte du composant en matériau élastique (3) est réduite,
- dans lequel les surfaces libres (5) sont fournies dans trois directions respectivement, la première surface libre, appelée surface libre extérieure (6), étant conçue dans la direction du côté extérieur du diamètre dans lequel le matériau élastique est combiné au matériau métallique ; la deuxième surface libre, appelée surface libre intérieure (7), étant conçue dans la direction du côté intérieur du diamètre dans lequel le matériau élastique est combiné au matériau métallique ; et la troisième surface libre, appelée surface libre latérale inclinée (8), est conçue dans la direction inclinée dans laquelle le matériau élastique est combiné au matériau métallique ; ces trois surfaces libres garantissent que la contrainte est relâchée lorsque le composant en matériau élastique est soumis à des contraintes dans plusieurs directions ;
- **caractérisé en ce que** la surface libre latérale inclinée (8) est reliée à la surface libre intérieure (7) pour former une structure sphérique de composant de matériau élastique, cette structure étant combinée à la surface libre extérieure (6), de sorte que l'ensemble du matériau élastique forme un composant de matériau élastique en forme de Y, afin de répondre simultanément aux exigences d'une très grande rigidité axiale et d'une faible rigidité radiale du composant élastique du système à roues indépendantes.

2. Dispositif de suspension élastique pour un crochet de moteur d'un système de bogie sans essieu selon la revendication 1, **caractérisé par le fait que** le composant en matériau élastique (3) est en caoutchouc et que le matériau en caoutchouc est composé avec le composant métallique (4) par vulcanisation intégrale, formant un composant composé élastique caoutchouc-métal (2), dans lequel le matériau en caoutchouc et le composant métallique (4) sont encapsulés.

3. Dispositif de suspension élastique pour un crochet de moteur d'un système de bogie sans essieu selon la revendication 1, **caractérisé en ce que** le composant métallique (4) comprend un anneau latéral métallique (12), un anneau intérieur métallique (13) et un anneau extérieur métallique (14), dans lequel une surface latérale de l'anneau latéral métallique (12) du dispositif de suspension élastique pour la suspension du moteur (1) est configurée pour être fixée au siège de montage de la traverse du bogie (11), et l'autre surface latérale de l'anneau latéral métallique (12) est vulcanisée avec le composant en caoutchouc (3) à travers une première surface du composant en caoutchouc (3) ; une seconde surface du composant en caoutchouc (3) reliée à l'anneau métallique latéral (12) est vulcanisée avec l'anneau métallique interne (13), l'anneau métallique interne (13) et le composant en caoutchouc (3) forment une structure d'encapsulation, et le composant en caoutchouc (3) est toujours enroulé autour de l'anneau métallique interne (13) pour s'étendre jusqu'à la surface intérieure du diamètre interne de l'anneau métallique interne (13), formant une couche d'encapsulation (18) ; un anneau extérieur métallique (14) est disposé dans la direction du diamètre extérieur dans laquelle l'anneau intérieur métallique (13) est combiné avec le composant en caoutchouc (3), et l'anneau extérieur métallique (14) est vulcanisé ensemble et entre en contact avec deux autres surfaces du composant en caoutchouc (3), de sorte que le composant en caoutchouc (3) est formé en un composant en caoutchouc (3) ayant des surfaces libres dans trois directions.

4. Dispositif de suspension élastique pour un crochet de moteur d'un système de bogie sans essieu selon la revendication 3, **caractérisé en ce que** l'anneau latéral métallique (12) est pourvu de trous de remplissage en caoutchouc (15).

5. Dispositif de suspension élastique pour un crochet de moteur d'un système de bogie sans essieu selon la revendication 3, **caractérisé en ce que** quatre trous de remplissage en caoutchouc (15) sont uniformément répartis sur l'anneau latéral métallique (12).
